Europäisches Patentamt

European Patent Office

Office européen des brevets

(19)

(11) Numéro de publication : **0 094 264**
**B1**

(12) **FASCICULE DE BREVET EUROPÉEN**

(45) Date de publication du fascicule du brevet :
**12.11.86**

(51) Int. Cl.⁴ : **B 01 D 29/30, A 01 J 25/00**

(21) Numéro de dépôt : **83400621.5**

(22) Date de dépôt : **24.03.83**

(54) **Tamiseur pour la séparation de particules solides contenues dans un liquide.**

(30) Priorité : **07.05.82 FR 8207973**

(43) Date de publication de la demande :
**16.11.83 Bulletin 83/46**

(45) Mention de la délivrance du brevet :
**12.11.86 Bulletin 86/46**

(84) Etats contractants désignés :
**DE GB IT NL SE**

(56) Documents cités :
**FR-A- 670 980**
**FR-A- 2 211 293**
**FR-A- 2 321 313**
**FR-A- 2 334 400**
**US-A- 1 619 052**

(73) Titulaire : **SERMIA Société dite:**
**33 avenue André Morizet**
**Boulogne Billancourt (Hauts de Seine) (FR)**

(72) Inventeur : **Liagre, Jean Marie-Louis**
**33, av. André Morizet**
**Boulogne sur Seine (FR)**

(74) Mandataire : **Cabinet BERT, DE KERAVENANT & HER-**
**RBURGER**
**115, Boulevard Haussmann**
**F-75008 Paris (FR)**

## Description

L'invention concerne un tamiseur pour la séparation de particules solides contenues dans un liquide.

Les tamiseurs de ce genre se composent d'un organe de brassage hélicoïdal qui est entraîné en rotation à l'intérieur d'un tamis cylindrique de façon que la périphérie de l'organe de brassage se déplace à proximité de la face interne du cylindre pour déplacer longitudinalement les particules solides qui sont récupérées à l'extrémité du cylindre du tamis, tandis que le liquide séparé s'écoule au travers des perforations du tamis.

Ces tamiseurs sont notamment mis en œuvre dans les fromageries pour assurer la séparation des fines de fromage qui subsistent dans le sérum, ces fines pouvant ensuite être réintroduites dans le circuit de fabrication du fromage.

Cependant, les tamiseurs réalisés jusqu'à présent sont considérés comme défectueux dans la mesure où ils n'offrent pas toutes les garanties sur le plan sanitaire et dans la mesure, notamment, où ils ne permettent pas un nettoyage parfait de l'intérieur du tamis, ainsi qu'une séparation totale, sur le plan bactériologique, entre les mécanismes d'entraînement en rotation de l'hélice et le tamis.

Vis-à-vis de ces dispositifs, la présente invention concerne un tamiseur pour la séparation des particules solides contenues dans un liquide, ce tamiseur se composant d'un tamis cylindrique à l'intérieur duquel tourne un organe de brassage hélicoïdal pouvant être ôté par l'une des extrémités du tamis, cet organe de brassage étant entraîné en rotation à son extrémité opposée par un moteur disposé à l'extérieur du tamis et séparé de ce dernier par une cloison étanche, l'arbre moteur étant supporté à rotation à l'extérieur du tamis et l'arbre de l'organe de brassage disposé coaxialement à l'arbre moteur se prolongeant par l'une de ses extrémités à l'extérieur du tamis au travers d'une perforation de la cloison étanche, caractérisé en ce que l'arbre moteur et l'extrémité de l'arbre de l'organe de brassage sont reliés par un assemblage amovible comprenant deux cônes complémentaires et une clavette, l'arbre moteur étant supporté à rotation par un roulement à billes éloigné de la cloison, un disque étant fixé à l'arbre moteur entre le roulement et l'orifice de la cloison.

Suivant une autre caractéristique de l'invention, l'arbre de l'organe de brassage traverse avec jeu l'orifice de la cloison, un joint d'étanchéité étant disposé sur l'organe de brassage pour s'appliquer autour de l'orifice contre la face de la cloison dirigée vers l'intérieur du tamis.

L'invention est représentée, à titre d'exemple non limitatif, sur les dessins ci-joints, dans lesquels :

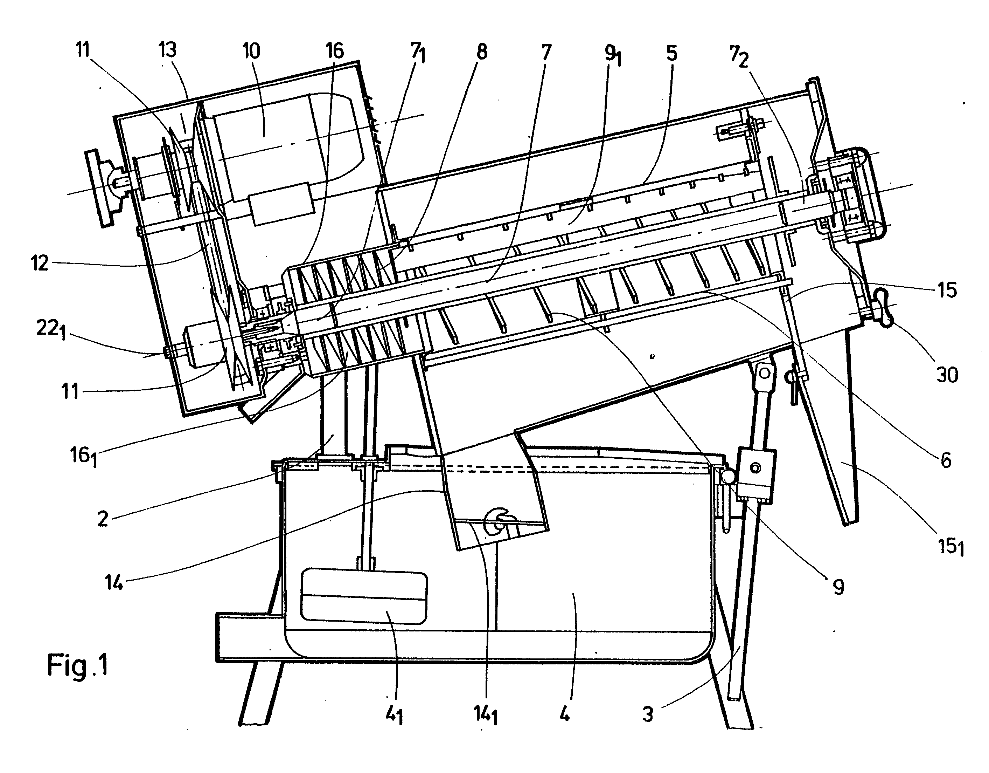

la figure 1 est une vue en coupe longitudinale schématique d'un tamiseur conforme à l'invention,

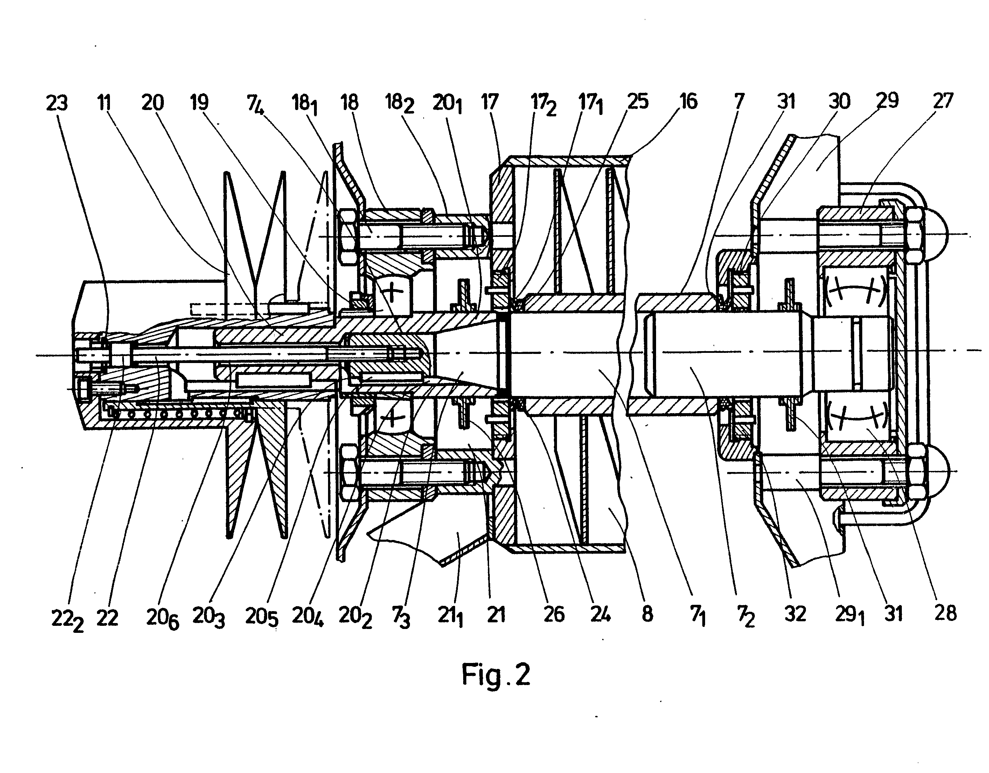

la figure 2 est une vue de détail agrandie montrant notamment le montage des extrémités de l'organe de brassage hélicoïdal.

Le tamiseur représenté sur les dessins ci-joints se compose d'un carter 1 qui est supporté de manière pivotante par un montant 2 et par une tige réglable 3 de façon qu'il soit possible de faire varier l'inclinaison du carter 1 au-dessus d'un bac 4 de récupération du liquide résultant de la séparation.

A l'intérieur de ce carter 1 est disposé un tamis cylindrique 5 à proximité de la paroi interne duquel tourne un organe de brassage hélicoïdal 6 qui se compose d'un tube axial 7 pourvu de portées d'arbres d'extrémités $7_1$ et $7_2$, ce tube 7 comportant une première structure hélicoïdale 8, réalisée à la forme d'une vis sans fin, et une deuxième structure hélicoïdale 9, réalisée à la forme d'un ressort à boudin dont les spires sont reliées, dans le sens longitudinal, par des lames $9_1$ faisant office de palettes.

L'organe de brassage 6 est entraîné en rotation à partir d'un moteur électrique 10 et par l'intermédiaire d'un variateur de vitesse à poulies 11 et courroie 12, cet ensemble moteur et variateur de vitesse étant disposé à l'intérieur d'un boîtier 13.

Le carter 1, à l'intérieur duquel est prévu le tamis cylindrique 5, comporte un orifice inférieur 14, disposé au-dessus du bac 4 afin de permettre l'écoulement du liquide issu de la séparation.

Un volet $14_1$ est prévu au travers de cet orifice afin de permettre son obturation.

Le carter 1 comporte, au voisinage de son extrémité supérieure, une cloison 15 supportant l'extrémité supérieure du tamis 5 par laquelle s'écoulent les particules solides déplacées longitudinalement par la structure hélicoïdale 9.

Ces particules solides s'écoulent alors à l'extérieur du tamiseur par une goulotte $15_1$.

A l'intérieur du bac 4, est également disposé un flotteur $4_1$ relié au circuit de commande d'une vanne (non représentée) qui est elle-même insérée dans le circuit d'alimentation du liquide vers le tamiseur.

Ce circuit débouche en $16_1$ à l'intérieur d'une partie cylindrique 16, qui prolonge le tamis 5 à l'extérieur du carter 1 et à l'intérieur de laquelle tourne la structure hélicoïdale 8.

Ce cylindre 16 comporte à son extrémité une cloison étanche 17 supportant le palier 18 à roulement à billes 19 assurant le montage de l'arbre 20 entraîné à partir du moteur 10 et par l'intermédiaire du variateur de vitesse 11, 12.

Le palier 18 est fixé à la cloison 17 par l'intermédiaire de vis $18_1$ et de colonnes $18_2$, fixées sur la face externe de la cloison 17, de façon à former un espace 21 à l'extérieur du cylindre 16 entre la cloison 17 et l'arbre 20 et ses supports.

L'arbre 20 est supporté par le roulement 19 de manière à pouvoir se déplacer angulairement et son extrémité $20_1$ est située à hauteur d'un orifice $17_1$ de la cloison 17, mais à l'extérieur du cylindre 16.

Cet arbre 20 présente une partie conique $20_2$ se prolongeant par une partie cylindrique $20_3$ pourvue d'une rainure longitudinale $20_4$ à l'intérieur de laquelle se loge une clavette $20_5$.

En outre, cet arbre 20 est pourvu d'un orifice axial $20_6$.

De même, l'arbre d'extrémité $7_1$ du tube 7 se prolonge au-delà de la cloison 17 par une partie conique $7_3$ correspondant à la partie conique $20_2$ de l'arbre 20 et par une partie cylindrique $7_4$ correspondant à la partie cylindrique $20_3$, cette partie cylindrique $7_4$ étant pourvue d'une rainure longitudinale recevant la clavette $20_5$.

Cette partie cylindrique $7_4$ est également pourvue d'un orifice axial taraudé recevant un goujon 22 qui peut être actionné de l'extérieur du tamiseur, en $22_1$. Ce goujon est bloqué longitudinalement par rapport à l'arbre 20 par l'intermédiaire d'une nervure annulaire $22_2$ qui est immobilisée axialement par une bague 23.

Cette disposition permet le montage axial du tube 7 par rapport à l'arbre 20 par la coopération des parties coniques $7_3$ et $20_2$, tandis que la coopération des parties cylindriques $7_4$ et $20_3$ par la clavette $20_5$ permet d'assurer le blocage en rotation du tube 7 et donc de la structure hélicoïdale 6 par rapport à l'arbre moteur 20.

Par ailleurs, cet assemblage comportant les parties coniques $7_3$ et $20_2$, ainsi que la clavette $20_5$ permet le démontage aisé de la structure hélicoïdale 6 par actionnement du goujon 22 dont le dévissage a pour effet de repousser l'arbre $7_1$ vers l'extérieur de l'arbre 20.

Le déblocage étant ainsi assuré par actionnement du goujon 22, il est alors possible de retirer axialement la structure hélicoïdale 6 hors du cylindre 16 et du tamis 5.

Un joint annulaire de compression 24 est disposé entre une collerette de l'arbre $7_1$ et l'extrémité $20_1$ de l'arbre 20. Ce joint 24 est disposé à hauteur de l'orifice $17_1$ de la cloison 17, cet orifice étant d'un diamètre supérieur au diamètre des arbres $7_1$ et 20 de façon que la fonction de centrage de cette extrémité de l'organe de brassage soit assurée uniquement par le palier 18 et le roulement à billes 19 qui sont éloignés de cette cloison 17.

L'étanchéité de la cloison 17 à hauteur de cet orifice $17_1$ est assurée par un joint annulaire à lèvre 25 qui est disposé, autour de l'arbre $7_1$, contre l'extrémité du tube $7_1$ et qui vient s'appliquer autour de l'orifice $17_1$ contre la face de cette cloison 17 qui est dirigée vers l'intérieur du cylindre 16.

Dans l'exemple représenté, l'orifice $17_1$ de la cloison 17, ainsi que la face contre laquelle s'applique le joint 25 sont déterminés par une rondelle $17_2$ fixée sur la cloison 17.

Par cette disposition, on constate que lorsque la structure hélicoïdale 6 est ôtée du tamiseur, le tamis 5 et le cylindre de prolongement 16 forment une structure qui intérieurement est totalement dépourvue d'aspérités et qui peut donc être lavée efficacement à l'aide d'un jet d'eau.

En outre, s'il se produit une fuite à hauteur du joint 25, le liquide ne risque en aucun cas d'atteindre le roulement à billes 19 étant donné qu'il s'écoule à l'extérieur du tamiseur par l'espace 21 et la goulotte $21_1$.

Un disque 26 est également prévu à la périphérie de l'arbre 20, à hauteur de cet espace 21, afin d'éviter que le liquide qui pourrait s'écouler le long de la face externe de l'arbre 20 ne puisse en aucun cas atteindre le roulement 19.

Le centrage de l'arbre supérieur $7_2$ par rapport au tamis 5 et au cylindre 16 est assuré également par un palier 27 à roulement à billes 28, le palier 27 étant supporté par des colonnes $29_1$ d'un flasque 29 fixé par des écrous 50 contre l'extrémité du carter 1.

Ce flasque 29 comporte également une rondelle 30 pourvue d'un orifice dont le diamètre est plus grand que celui de l'arbre $7_2$, cette rondelle 30 recevant en appui sur sa face interne la lèvre d'un joint annulaire 30 disposé autour de l'arbre $7_2$ et contre l'extrémité supérieure du tube 7.

Un disque 31 est disposé sur l'arbre $7_2$ dans l'espace 32 séparant le roulement 28 du flasque 29 afin d'éviter que la graisse de roulement 28 puisse s'écouler le long de l'arbre $7_2$ vers l'intérieur du tamis.

Pour permettre le démontage de la structure hélicoïdale, il suffira donc de dévisser les vis 30, puis de dévisser le goujon 22, cette structure hélicoïdale pouvant alors être enlevée axialement pour son nettoyage de l'intérieur du tamis et du cylindre de prolongement 16.

**Revendications**

1. Tamiseur pour la séparation des particules solides contenues dans un liquide, ce tamiseur se composant d'un tamis cylindrique (5) à l'intérieur duquel tourne un organe de brassage hélicoïdal (6) pouvant être ôté par l'une des extrémités du tamis, cet organe de brassage étant entraîné en rotation à son extrémité opposée par un moteur (10) disposé à l'extérieur du tamis et séparé de ce dernier par une cloison étanche (17), l'arbre moteur (20) étant supporté à rotation à l'extérieur du tamis et l'arbre ($7_1$) de l'organe de brassage disposé coaxialement à l'arbre moteur se prolongeant par l'une de ses extrémités à l'extérieur du tamis au travers d'une perforation ($17_1$) de la cloison étanche, caractérisé en ce que l'arbre moteur (20) et l'extrémité de l'arbre ($7_1$) de l'organe de brassage sont reliés par un assemblage amovible comprenant deux cônes complémentaires ($7_3$, $20_2$) et une clavette ($20_5$), l'arbre moteur (20) étant supporté à rotation par un roulement à billes (19) éloigné de la cloison (17), un disque (26) étant fixé à l'arbre moteur (20) entre le roulement (19) et l'orifice ($17_1$) de la cloison (17).

2. Tamiseur conforme à la revendication 1, caractérisé en ce que l'arbre de l'organe de brassage (6) traverse avec jeu l'orifice ($17_1$) de la cloison (17), un joint d'étanchéité (25) étant disposé sur l'organe de brassage pour s'appliquer autour de l'orifice (17₁) contre la face de la cloison (17) dirigée vers l'intérieur du tamis (5).

## Claims

1. Screener for separating solid particles contained in a liquid, said screener being composed of a cylindrical screen (5) inside which rotates a helical mixing means (6) capable of being removed through one of the ends of the screen, this mixing means being driven with a rotary movement at its opposite end by a motor (10) disposed outside the screen and separated therefrom by a fluid-tight partition (17), the drive shaft (20) being rotationally supported outside the screen and the shaft (7₁) of the mixing means being disposed coaxially of the drive shaft and extended by one of its ends to outside the screen through a perforation (17₁) in the fluid-tight partition, characterised in that the drive shaft (20) and the end of the shaft (7₁) of the mixing means are connected by a removable assembly comprising two complementary cones (7₃, 20₂) and a key (20₅), the drive shaft (20) being rotationally supported by a ball bearing (19) remote from the partition (17), a disc (26) being fixed to the drive shaft (20) between the bearing (19) and the orifice (17₁) in the partition (17).

2. Screener according to Claim 1, characterised in that the shaft of the mixing member (6) passes with clearance through the orifice (17₁) in the partition (17), a fluid-tight seal (25) being disposed on the mixing member so that it can be applied around the orifice (17₁) against the face of the partition (17) which is directed towards the interior of the screen (5).

## Patentansprüche

1. Siebvorrichtung zur Entfernung von Feststoffteilchen aus einer Flüssigkeit, bestehend aus einem zylindrischen Sieb (5), in dessen Innerem ein schraubenlinienförmiges, an einem der Enden des Siebes herausnehmbares Rührorgan (6) umläuft, das an seinem gegenüberliegenden Ende von einem außerhalb des Siebes angeordneten und von diesem durch eine dichte Trennwand (17) getrennten Motor (10) für seinen Umlauf angetrieben ist, wobei die Antriebswelle (20) außerhalb des Siebes drehbar abgestützt und die koaxial zur Antriebswelle angeordnete Welle (7₁) des Rührorgans sich an einem ihrer Enden außerhalb des Siebes durch eine Öffnung (17₁) der dichten Trennwand hindurch fortsetzt, dadurch gekennzeichnet, daß die Antriebswelle (20) und das Wellenende (7₁) des Rührorgans durch eine zwei Ergänzungskegel (7₃, 20₂) und einen Paßkeil (20₅) umfassende abnehmbare Einrichtung miteinander verbunden sind, die Antriebswelle (20) von einem Kugellager (19) im Abstand von der Trennwand (17) drehbar abgestützt ist und auf der Antriebswelle (20) zwischen dem Lager (19) und der Öffnung (17₁) der Trennwand (17) eine Scheibe (26) angebracht ist.

2. Siebvorrichtung nach Anspruch 1, dadurch gekennzeichnet, daß die Welle des Rührorgans (6) die Öffnung (17₁) der Trennwand (17) mit Spiel durchgreift und auf dem Rührorgan eine Dichtung (25) für einen Anlage um die Öffnung (17₁) gegen die zum Inneren des Siebes (5) gerichtete Fläche der Trennwand (17) angebracht ist.

Fig.1

Fig. 2

0 094 264